# EUROPÄISCHE PATENTSCHRIFT

(11) **EP 4 178 823 B1**
(45) Veröffentlichungstag und Bekanntmachung des Hinweises auf die Patenterteilung: **05.06.2024**
(21) Anmeldenummer: 21794558.3
(22) Anmeldetag: 19.10.2021
(51) Int. Cl.: B60L 7/24, B60L 13/03, F16D 63/00

(54) **LINEARES TRANSPORTSYSTEM UND BEWEGLICHE EINHEIT EINES LINEAREN TRANSPORTSYSTEMS**
LINEAR TRANSPORT SYSTEM AND MOVABLE UNIT OF A LINEAR TRANSPORT SYSTEM
SYSTÈME DE TRANSPORT LINÉAIRE ET UNITÉ MOBILE D'UN SYSTÈME DE TRANSPORT LINÉAIRE

(30) Priorität: 22.10.2020 DE 102020127822
(43) Veröffentlichungstag der Anmeldung: 17.05.2023
(73) Patentinhaber: Beckhoff Automation GmbH, 33415 Verl (DE)
(72) Erfinder: ACHTERBERG, Jan, 47249 Duisburg (DE); BETTENWORTH, Manuel, 33335 Gütersloh (DE); PRÜSSMEIER, Uwe, 32657 Lemgo (DE); SINZENICH, Andreas, 33803 Steinhagen (DE)
(74) Vertreter: Patentanwaltskanzlei WILHELM & BECK
(86) Internationale Anmeldenummer: PCT/EP2021/078901
(87) Internationale Veröffentlichungsnummer: WO 2022/084287

(56) Entgegenhaltungen:
- CN-A- 106 429 712
- JP-A- H09 224 366
- JP-B2- 3 719 543
- US-A1- 2013 315 512

## Beschreibung

Die Erfindung betrifft ein lineares Transportsystem und eine bewegliche Einheit eines linearen Transportsystems.

Diese Patentanmeldung beansprucht die Priorität der deutschen Patentanmeldung DE 10 2020 127 822.5 vom 22. Oktober 2020.

Aus dem Stand der Technik sind lineare Transportsysteme bekannt, bei denen sich bewegliche Einheiten angetrieben durch einen Linearmotor entlang einer Führungsschiene bewegen können. Die Patentanmeldung DE 10 2018 111 715 A1 offenbart beispielsweise ein lineares Transportsystem mit solchen Bauelementen. In der genannten Patentanmeldung ist ferner ein System zum Übertragen von Energie und Daten von stationären Einheiten des linearen Transportsystems zu beweglichen Einheiten des linearen Transportsystems offenbart. Solche linearen Transportsysteme können in der Automatisierungstechnik zum Einsatz kommen und dabei beispielsweise zum Transport von Produkten verwendet werden. Je nach Art der Produkte, welche mit einem linearen Transportsystem transportiert werden sollen, kann es sein, dass eine Positionierung der beweglichen Einheiten ausschließlich mittels des Linearmotors nicht ausreichend ist. Insbesondere kann es erforderlich sein, unkontrollierte Bewegungen zu vermeiden und bewegliche Einheiten abzubremsen.

Ferner ist in der Druckschrift JP H09 224 366 A ein lineares Transportsystem mit einer Bremsvorrichtung und in der Druckschrift CN 106 429 712 A ein Sicherheitssystem für einen Aufzug offenbart.

Eine Aufgabe der vorliegenden Erfindung ist es, ein lineares Transportsystem zur Verfügung zu stellen, bei dem die beweglichen Einheiten innerhalb des linearen Transportsystems fixiert werden können. Eine weitere Aufgabe der vorliegenden Erfindung ist es, eine bewegliche Einheit eines linearen Transportsystems mit einer solchen Fixierungsmöglichkeit bereitzustellen.

Diese Aufgaben werden mit dem linearen Transportsystem und der beweglichen Einheit eines linearen Transportsystems der unabhängigen Patentansprüche gelöst. Vorteilhafte Ausgestaltungen sind in den abhängigen Patentansprüchen angegeben.

Ein lineares Transportsystem mit zumindest einer stationären Einheit, zumindest einer beweglichen Einheit und einem Antrieb zum Antreiben der beweglichen Einheit, wobei der Antrieb einen Linearmotor umfasst, wobei der Linearmotor einen Stator und einen Läufer umfasst, wobei der Stator an der stationäre Einheit angeordnet ist, wobei die stationäre Einheit weiter eine Energiesendespule aufweist, wobei ein Läufer an der beweglichen Einheit angeordnet ist und einen oder mehrere Magnete umfasst, wobei die bewegliche Einheit weiter eine Anschalteinheit umfasst, die eine Energieempfangsspule aufweist, wobei von der Energiesendespule der stationäre Einheit Energie zur Energieempfangsspule der Anschalteinheit übertragen wird, wobei die bewegliche Einheit eine Fixiervorrichtung aufweist, wobei die Fixiervorrichtung eingerichtet ist, die beweglichen Einheit im linearen Transportsystem zu fixieren, wobei die Fixiervorrichtung ein bewegliches Element und einen Elektromagneten umfasst, wobei das bewegliche Element beweglich zwischen einer ersten Position und einer zweiten Position ist, wobei das bewegliche Element in der ersten Position ein mechanisches Fixieren der beweglichen Einheit auslöst, wobei das bewegliche Element mittels des Elektromagneten in der zweiten Position gehalten wird, wobei ein Rückstellelement gegen eine durch den Elektromagneten erzeugte Kraft wirkt, wobei durch das Rückstellelement eine Bewegung des beweglichen Elements in die erste Position erfolgt, wobei die Anschalteinheit mit dem Elektromagneten verbunden ist, um den Elektromagnet mittels der Energieempfangsspule mit einem Strom zu versorgen.

Die Energie zum Bewegen des beweglichen Elements wird mittels der Energiesendespule und der Energieempfangsspule von der stationären Einheit zur beweglichen Einheit übertragen. Mittels des Fixierelements kann die bewegliche Einheit innerhalb des linearen Transportsystems fixiert werden, wobei unter dem Begriff Fixieren sowohl das Erzeugen einer kompletten Unbeweglichkeit der beweglichen Einheit als auch eine Hinderung einer Bewegung der beweglichen Einheit umfasst ist.

Die Fixiervorrichtung kann also eingerichtet sein, eine Bewegung der beweglichen Einheit komplett zu unterdrücken oder auch abzubremsen. Dabei kann es vorgesehen sein, dass insbesondere eine Bewegung in eine Antriebsrichtung, also eine Richtung, mit der die bewegliche Einheit mittels des Linearmotors bzw. Antriebs bewegt werden kann, zu fixieren.

Das Fixieren der beweglichen Einheit kann insbesondere in drei verschiedenen Situationen sinnvoll sein. Zunächst kann eine komplette mechanische Fixierung der beweglichen Einheit dazu führen, dass ein auf der beweglichen Einheit angeordnetes Produkt bearbeitet werden kann und keine Verschiebung der beweglichen Einheit während der Bearbeitung möglich ist. Dies ist beispielsweise dann vorteilhaft, wenn ein Verfahren zum Bearbeiten des Produkts verwendet werden soll, welches eine Kraft auf das Produkt bewirkt, beispielsweise in einem Fräs- oder Bohrvorgang. Des Weiteren kann mittels der Fixiereinrichtung ein Abbremsen der beweglichen Einheit erreicht werden, um so ein Auflaufen der beweglichen Einheit auf ein Hindernis zu vermeiden. Dies kann beispielsweise durch eine Ausgestaltung als Bremse erreicht werden, wobei eine Steuerung Signale ausgibt, anhand derer die Fixiervorrichtung gesteuert wird. Außerdem kann vorgesehen sein, dass die Fixiervorrichtung dazu dient, eine Bewegung der beweglichen Einheit zu unterdrücken, beispielsweise bei einem Stromausfall und damit einem Ausfall der Energieversorgung. Dies ermöglicht, ein unkontrolliertes Weiterlaufen der beweglichen Einheiten zu unterdrücken.

In einer Ausführungsform kann das bewegliche Element mittels eines Elektromagneten in der zweiten Position gehalten werden. Der Elektromagnet wird mittels der Energiesendespule beziehungsweise der Energieempfangsspule mit einem Strom versorgt. Ein Rückstellelement wirkt gegen eine durch den Elektromagneten erzeugte Kraft, wobei durch das Rückstellelement eine Bewegung des beweglichen Elements in die erste Position erfolgen kann.

Diese Ausführungsform ist insbesondere für den Anwendungsfall als Sicherheitselement nützlich. Im Normalbetrieb wird der Elektromagnet mittels der Energiesendespule und der Energieempfangsspule mit einem Strom versorgt und dadurch das bewegliche Element in die zweite Position gebracht. Fällt nun der Strom aus, so bricht das Magnetfeld des Elektromagneten zusammen und das Rückstellelement bewegt das bewegliche Element in die erste Position, wodurch eine Fixierung der beweglichen Einheit ausgelöst wird. Ein solches Sicherheitselement kann insbesondere auch ohne Steuerung, also passiv, ausgestaltet sein, da durch die beschriebenen Komponenten ein Ausfall der Stromversorgung des Elektromagneten direkt und ohne Eingriff einer Steuerung zu einer Fixierung führt. Dadurch können eventuelle Schäden durch einen Stromausfall an der Anlage vermieden werden.

In einer Ausführungsform weist die stationäre Einheit eine stationäre Antenne und die bewegliche Einheit eine bewegliche Antenne auf. Die bewegliche Einheit weist eine Steuerung auf, wobei die Steuerung eingerichtet ist, die Fixiervorrichtung anhand eines von der stationären Antenne zur beweglichen Antenne gesendeten Signals zu steuern.

Dadurch kann ein Steuern der Fixiervorrichtung erfolgen, sodass im Normalbetrieb Fixierungen erzeugt und wieder gelöst werden können. Dies kann beispielsweise dazu dienen, eine Bewegung der beweglichen Einheit abzubremsen oder die bewegliche Einheit für einen weiteren Verfahrensschritt zu fixieren, bei dem eine mechanische Einwirkung auf ein auf der beweglichen Einheit angeordnetes Produkt erfolgen soll.

Die beiden letzten Ausführungsbeispiele können auch kombiniert werden derart, dass einerseits ein Stromausfall zu einem Abschalten des Elektromagneten führt und somit die Fixierung ausgelöst wird und andererseits ein Strom des Elektromagneten auch mittels der Steuerung abgeschaltet werden kann und in diesem Fall das Rückstellelement ebenfalls zu einer, in diesem Fall gesteuerten, Fixierung der beweglichen Einheit führt.

In einer Ausführungsform weist das lineare Transportsystem eine Führungsschiene auf. Die beweglichen Einheiten können durch den Antrieb entlang der Führungsschiene bewegt werden. Die bewegliche Einheit weist Laufrollen auf, die auf Laufflächen der Führungsschiene abrollen. Durch die Fixiervorrichtung wird eine Bewegung der beweglichen Einheit entlang der Führungsschiene erschwert. Dadurch kann ein Abbremsen oder auch ein vollständiges Fixieren der beweglichen Einheit erreicht werden.

In einer Ausführungsform weist die Führungsschiene Bohrungen auf, wobei das bewegliche Element in die Bohrungen eingreifen kann. Das bewegliche Element ist in der ersten Position zumindest teilweise in einer der Bohrungen angeordnet. Dadurch kann insbesondere eine vollständige Fixierung erfolgen, da durch den Eingriff des beweglichen Elements in eine Bohrung der Führungsschiene eine weitere Bewegung der beweglichen Einheit entlang der Führungsschiene unterbunden werden kann. Dadurch kann die bewegliche Einheit auf der Führungsschiene fixiert werden.

In einer Ausführungsform ist das bewegliche Element eingerichtet, die bewegliche Einheit gegen durch den Antrieb ausgelöste Bewegungen zu fixieren.

In einer Ausführungsform weist das bewegliche Element einen ersten Bremsbelag auf. Der erste Bremsbelag berührt die Führungsschiene, wenn das bewegliche Element in der ersten Position angeordnet ist. Dabei kann es vorgesehen sein, dass der erste Bremsbelag die Führungsschiene nicht berührt, wenn das bewegliche Element in der zweiten Position angeordnet ist. Diese Ausführungsform ermöglicht ein Abbremsen der beweglichen Einheit während der Bewegung entlang der Führungsschiene. Je nach Reibwert zwischen dem ersten Bremsbelag und der Führungsschiene kann dies neben dem Abbremsen auch zu einer vollständigen Fixierung der beweglichen Einheit dienen, wenn eine durch den ersten Bremsbelag auf die Führungsschiene vermittelte Reibungskraft größer ist als eine Kraft, mit der die bewegliche Einheit bewegt werden würde. Ein solches System kann eine effiziente Abbremsung der beweglichen Einheit erzeugen. Dabei können auch mehrere erste Bremsbeläge vorgesehen sein.

In einer Ausführungsform weist das bewegliche Element einen zweiten Bremsbelag auf. Der zweite Bremsbelag berührt eine der Laufrollen, wenn das bewegliche Element in der ersten Position angeordnet ist. In dieser Ausführungsform wird die Bewegung der Laufrollen durch den zweiten Bremsbelag unterdrückt und somit ebenfalls eine Fixierung der beweglichen Einheit erreicht. Dabei können auch mehrere zweite Bremsbeläge vorgesehen sein, die auf eine oder mehrere Laufrollen einwirken können.

Die beschriebenen Ausführungsformen, also der Eingriff des beweglichen Elements in Bohrungen der Führungsschiene, das Versehen des beweglichen Elements mit einem ersten Bremsbelag, der auf die Führungsschiene aufgesetzt werden kann und das Versehen des beweglichen Elements mit einem zweiten Bremsbelag, der auf die Laufrollen wirken kann, können in beliebigen Kombinationen miteinander kombiniert werden. Beispielsweise können auch mehrere verschiedene Fixierungsvorrichtungen auf der beweglichen Einheit angeordnet sein, und in verschiedenen Situationen zum Einsatz kommen. Eine der beiden Ausführungsformen Bremsbelag kann zum Beispiel als Bremse zum Einsatz kommen, während das Fixieren mittels Bohrung und in die Bohrung eingreifenden beweglichen Element im Falle eines Stromausfalls zum Einsatz kommen kann. Werden die Ausführungsbeispiele mit erstem Bremsbelag und zweitem Bremsbelag nicht kombiniert, können sowohl der erste Bremsbelag als auch der zweite Bremsbelag als Bremsbelag bezeichnet werden.

Die für das lineare Transportsystem beschriebenen Merkmale der beweglichen Einheit können jeweils auch zur alleinigen Verbesserung der beweglichen Einheit vorgesehen sein.

Die Erfindung wird nachfolgend anhand von Ausführungsbeispielen und unter Bezugnahme auf Figuren näher erläutert. Dabei zeigen jeweils in schematischer Darstellung
- Fig. 1: ein lineares Transportsystem;
- Fig. 2: einen Ausschnitt aus dem linearen Transportsystem;
- Fig. 3: einen weiteren Ausschnitt aus dem linearen Transportsystem;
- Fig. 4: eine Führungsschiene mit Bohrungen;
- Fig. 5: einen Querschnitt durch eine Führungsschiene und eine bewegliche Einheit;
- Fig. 6: einen weiteren Querschnitt durch eine Führungsschiene und eine bewegliche Einheit;
- Fig. 7: einen weiteren Ausschnitt eines linearen Transportsystems;
- Fig. 8: eine bewegliche Einheit mit einem ersten Bremsbelag;
- Fig. 9: eine vergrößerte Darstellung einer beweglichen Einheit mit einem ersten Bremsbelag;
- Fig. 10: eine bewegliche Einheit mit einem ersten Bremsbelag ohne abgebildete Führungsschiene;
- Fig. 11: eine bewegliche Einheit mit einem zweiten Bremsbelag;
- Fig. 12: eine vergrößerte Darstellung der beweglichen Einheit mit zweitem Bremsbelag; und
- Fig. 13: eine schematische Darstellung einer Fixiervorrichtung mit einem zweiten Bremsbelag.

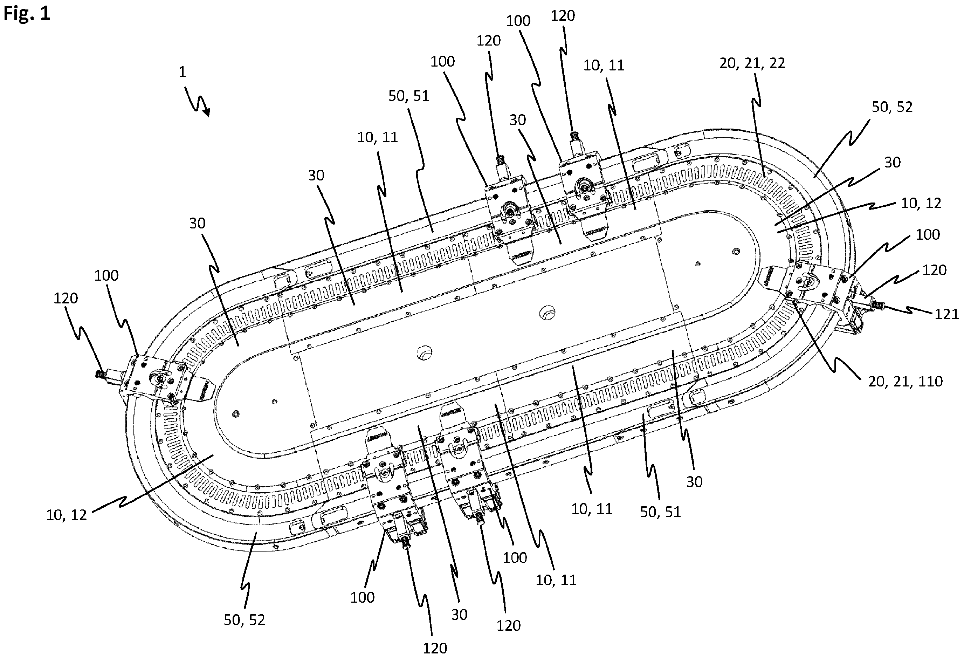

Fig. 1 zeigt ein lineares Transportsystem 1, bestehend aus mehreren stationären Einheiten 10 und mehreren beweglichen Einheiten 100. Es sind auch Ausführungsbeispiele mit nur einer stationären Einheit 10 und/oder einer beweglichen Einheit 100 möglich. Die stationären Einheiten 10 umfassen gerade stationäre Einheiten 11 und gebogene stationäre Einheiten 12, wobei die stationären Einheiten 10 derart angeordnet sind, dass sich eine geschlossene Bewegungsbahn ergibt. Dies bedeutet, dass die beweglichen Einheiten 100 entlang der stationären Einheiten 10 in einer geschlossenen Bahnkurve bewegt werden können. Ferner sind an den stationären Einheiten 10 Führungsschienen 50 angeordnet, wobei die Führungsschienen 50 gerade Führungsschienen 51 und gebogene Führungsschienen 52 umfassen. Die beweglichen Einheiten 100 können entlang den Führungsschienen 50 auf einer geschlossenen Bahn bewegt werden. Um die beweglichen Einheiten 100 anzutreiben, weist das lineare Transportsystem 1 einen Antrieb 20 auf. Der Antrieb 20 umfasst einen Linearmotor 21 bestehend aus einem Stator 22 und einem Läufer 110 auf. Der Stator 22 ist dabei an den stationären Einheiten 10 angeordnet, während der Läufer 110 an den beweglichen Einheiten 100 angeordnet ist. Der Übersichtlichkeit halber ist der Läufer 110 nur bei einer der beweglichen Einheiten 100 eingezeichnet, jedoch auch bei den anderen beweglichen Einheiten 100 vorhanden. Mittels des Antriebs 20 können die beweglichen Einheiten 100 entlang der Führungsschienen 50 bewegt werden.

Die beweglichen Einheiten 100 weisen eine Fixiervorrichtung 120 auf. Die Fixiervorrichtung 120 weist ein bewegliches Element 121 auf. Das bewegliche Element 121 kann zwischen einer ersten Position und einer zweiten Position bewegt werden, wobei das bewegliche Element in der ersten Position ein mechanisches Fixieren der beweglichen Einheit 100 auslöst. Innerhalb der stationären Einheiten 10 sind Energiesendespulen 30 angeordnet, mit denen Energie von den stationären Einheiten 10 auf die beweglichen Einheiten 100 übertragen werden kann.

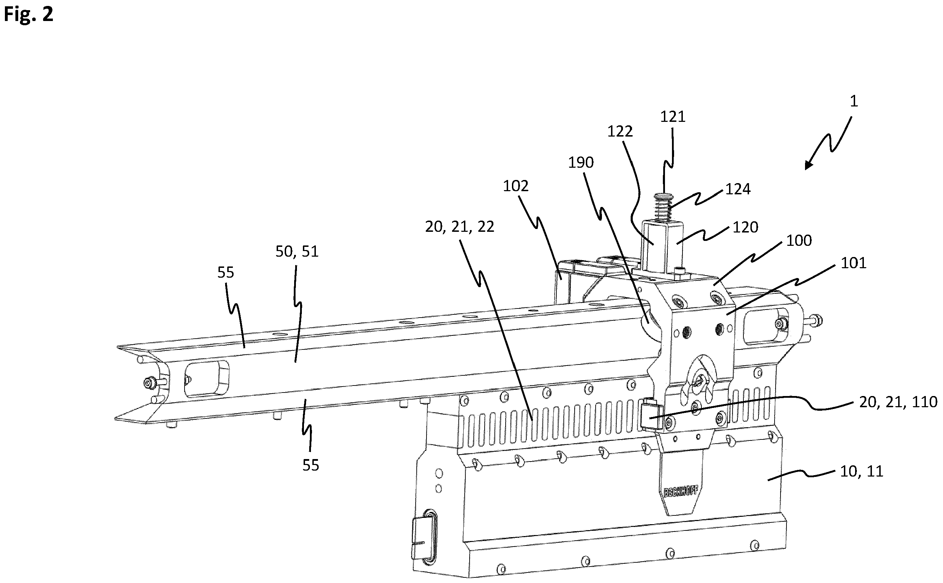

Fig. 2 zeigt einen Ausschnitt aus dem linearen Transportsystem 1 der Fig. 1. Gezeigt ist eine der geraden stationären Einheiten 11, eine der geraden Führungsschienen 51 und eine an der Führungsschiene 51 angeordnete bewegliche Einheit 100. Die bewegliche Einheit 100 weist dabei einen Rahmen 101 auf, an dem Führungsrollen 190 angeordnet sind. Die Führungsrollen 190 können an Laufflächen 55 der Führungsschiene 50 abrollen. Die bewegliche Einheit 100 kann also entlang der Führungsschiene 50 bewegt werden und dabei mittels des Antriebs 20 angetrieben werden. Die bewegliche Einheit 100 weist ferner eine Anschalteinheit 102 auf, wobei die Anschalteinheit 102 eine Energieempfangsspule beinhalten kann. Somit kann über die Energiesendespule 30 Energie zur Energieempfangsspule der Anschalteinheit 102 übertragen werden. Die Fixiervorrichtung 120 weist das bewegliche Element 121 und einen Elektromagneten 122 auf. Die bewegliche Einheit 121 kann dabei mittels des Elektromagneten 122 von der Führungsschiene 50 wegbewegt werden. Dadurch ist die bewegliche Einheit 121 in der ersten Position angeordnet. Ein Rückstellelement 124, welches hier als Feder ausgestaltet ist, dient dazu, das bewegliche Element 121 wieder in Richtung der Führungsschiene 50 zu bewegen, wenn der Elektromagnet 122 nicht mehr mit elektrischem Strom versorgt wird und somit dazu, das bewegliche Element 121 in eine zweite Position in Richtung der Führungsschiene 50 zu bewegen.

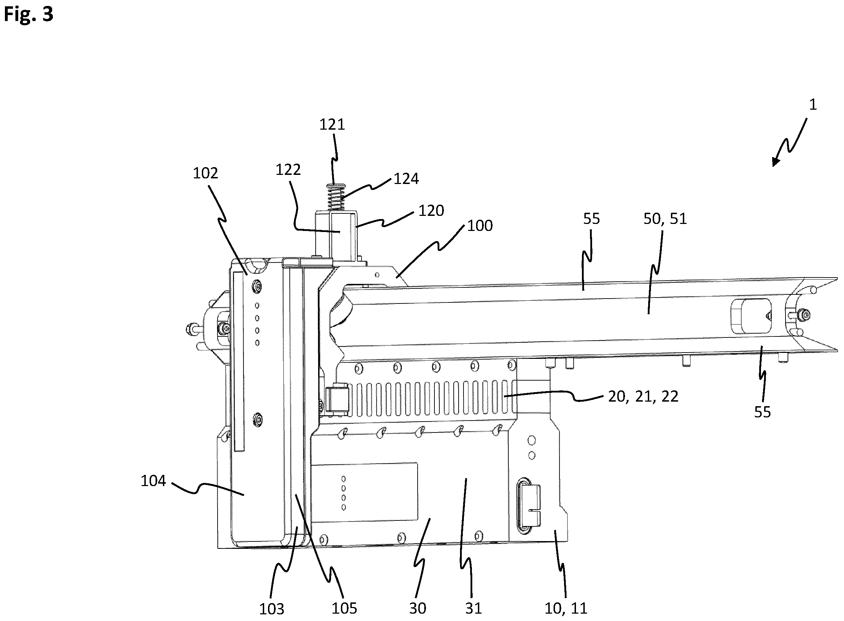

Fig. 3 zeigt eine rückwärtige Ansicht des Ausschnitts des linearen Transportsystems 1 der Fig. 2. Innerhalb der Anschalteinheit 102 ist die Energieempfangsspule 103 angeordnet derart, dass sie der Energiesendespule 30 der stationären Einheit 10 gegenüberliegt. Ferner ist innerhalb der Anschalteinheit 102 eine optionale Steuerung 104 angeordnet. Die Steuerung 104 kann dazu dienen, das bewegliche Element 121 mittels des Elektromagneten 122 gesteuert zu bewegen.

Die stationäre Einheit 10 weist eine optionale stationäre Antenne 31 auf. Die Anschalteinheit 102 der beweglichen Einheit 100 weist eine optionale bewegliche Antenne 105 auf, wobei die bewegliche Antenne 105 eine feste Position relativ zur beweglichen Einheit 100 hat und mit der beweglichen Einheit 100 mitbewegt wird. Über die stationäre Antenne 31 beziehungsweise die bewegliche Antenne 105 können Daten von der stationären Einheit 10 zur beweglichen Einheit 100 vice versa übertragen werden, wobei die Steuerung 104 dann den Elektromagneten 122 und somit das bewegliche Element 121 steuern kann.

Die Energieempfangsspule 103, die Steuerung 104 und die bewegliche Antenne 105 sind als Teil der Anschalteinheit 102 dargestellt, können jedoch auch an der beweglichen Einheit 100 angeordnet sein, ohne Teil einer Anschalteinheit 102 zu sein. Dies gilt auch für die folgenden Ausführungen.

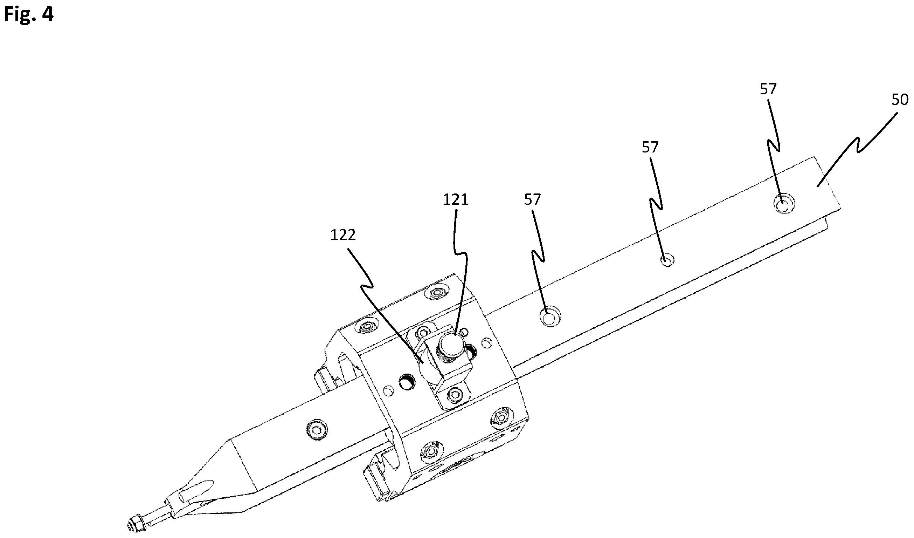

Fig. 4 zeigt eine Ansicht von oben auf die Führungsschiene 50 des Ausschnitts des linearen Transportsystems der Figuren 2 und 3. Die Führungsschiene weist Bohrungen 57 auf, wobei das bewegliche Element 121 in die Bohrungen 57 eingreifen kann. In der ersten Position ist das bewegliche Element 121 zumindest teilweise in einer der Bohrungen 57 angeordnet.

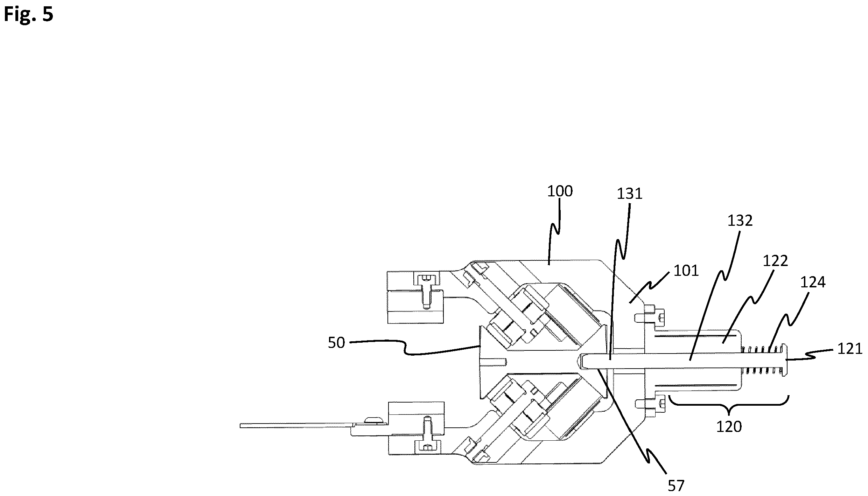

Fig. 5 zeigt einen Querschnitt durch die bewegliche Einheit 100 und die Führungsschiene 50, während die bewegliche Einheit 121 zumindest teilweise in der Bohrung 57 angeordnet ist. Die bewegliche Einheit 121 überragt dabei den Rahmen 101 der beweglichen Einheit 100 derart, dass das bewegliche Element 121 in der Bohrung 57 angeordnet ist. Dabei ist die bewegliche Einheit 121 in einer ersten Position 131 angeordnet. Die Fixiervorrichtung 120 weist wiederum den Elektromagneten 122 und das Rückstellelement 124 in Form einer Feder auf. In der ersten Position 131 ist das Rückstellelement 124 entspannt. Wird nun mittels der Energiesendespule 30 und der Energieempfangsspule 103 Strom zur beweglichen Einheit 100 übertragen, kann der Elektromagnet 122 bestromt, dadurch ein Magnetfeld erzeugt und dadurch das bewegliche Element 121 aus der Bohrung 57 herausbewegt werden. Diese Bewegung erfolgt gegen eine rückstellende Kraft des Rückstellelements 124. Im gezeigten Ausführungsbeispiel wird also das Rückstellelement 124 gedehnt und kann, sobald der Elektromagnet 122 keine weitere Kraft mehr ausübt, das bewegliche Element 121 wieder in die erste Position 131 bewegen.

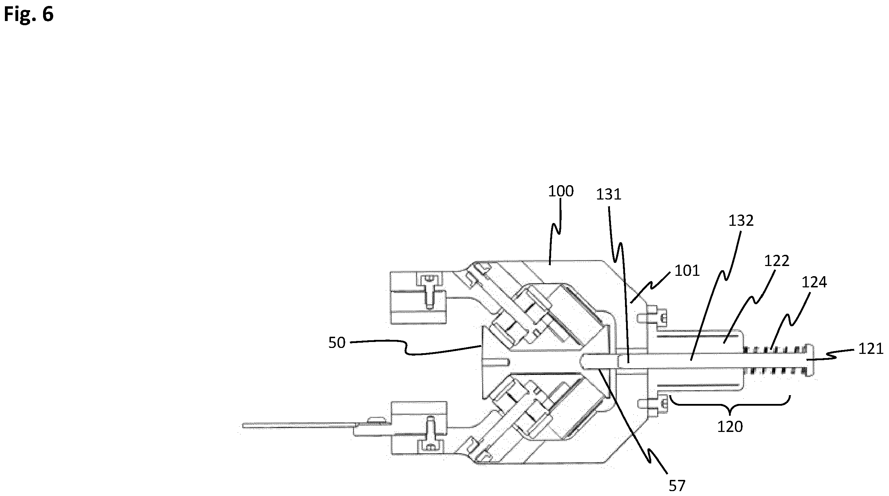

Fig. 6 zeigt den Querschnitt der Fig. 5, nachdem der Elektromagnet 122 aktiviert und das bewegliche Element 121 aus der Bohrung 57 bewegt wurde. In dieser zweiten Position 132 des beweglichen Elements 121 kann die bewegliche Einheit 100 entlang der Führungsschiene 50 bewegt werden. Fällt nun beispielsweise die Stromversorgung aus, wird das bewegliche Element 121 aufgrund des Rückstellelements 124 wieder in Richtung der ersten Position 131 bewegt und greift in eine der Bohrungen 57 ein, sodass nunmehr eine Fixierung der beweglichen Einheit 100 erfolgt. Dabei kann das Deaktivieren des Elektromagneten einerseits durch einen Stromausfall und andererseits aber auch durch ein Signal einer in der Anschalteinheit 102 angesteuerten Steuerung 104 erfolgen. Bei einer weiteren Bewegung der beweglichen Einheit 100 greift das bewegliche Element 121 spätestens in die nächste Bohrung 57, welche erreicht wird, ein.

Bei der in den Figuren 1 bis 6 gezeigten Fixiervorrichtung 120 wird das bewegliche Element 121 senkrecht zur Führungsschiene 50 auf die Führungsschiene 50 zu bewegt. Ziel ist, dass das bewegliche Element 121 in die Bohrungen 57 eingreifen und dadurch eine Fixierung der beweglichen Einheit 100 gegen eine weitere Bewegung entlang der Führungsschiene 50 erreichen kann. Dies kann einerseits im Rahmen der beschriebenen Notbremse erfolgen, sodass nach einem Stromausfall die beweglichen Einheiten 100 durch eine Bewegung der beweglichen Elemente 121 in die Bohrungen 57 von einer weiteren Bewegung abgehalten werden. Ferner kann dies ebenfalls genutzt werden, um die beweglichen Einheiten 100 zu fixieren, während ein auf der beweglichen Einheit 100 angeordnetes Produkt in einer Bearbeitungsstation bearbeitet wird.

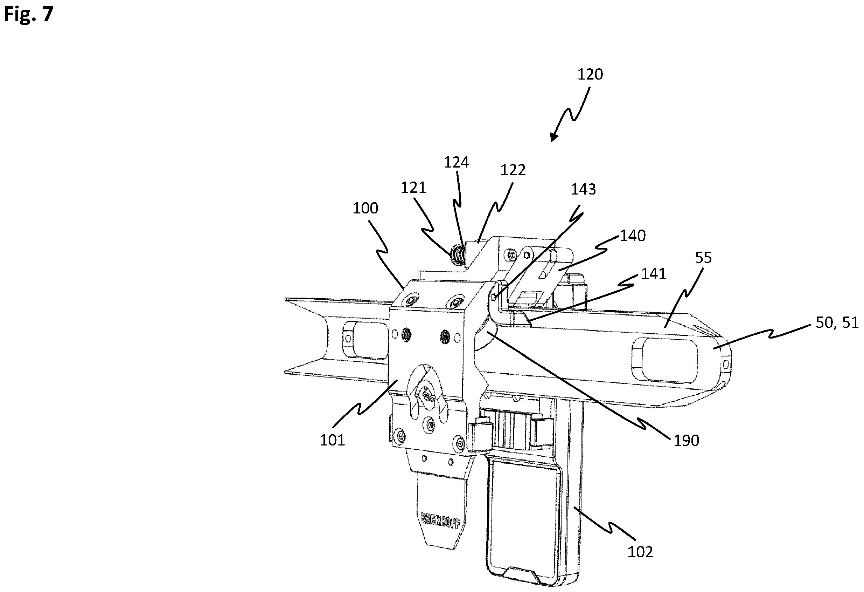

Fig. 7 zeigt eine bewegliche Einheit 100 an einer Führungsschiene 50, bei der die Fixiervorrichtung 120 anders aufgebaut ist. In diesem Ausführungsbeispiel kann die bewegliche Einheit 121 mittels des Elektromagneten 122 nicht senkrecht zur Führungsschiene 50, sondern parallel zur Führungsschiene 50 bewegt werden. Über einen Bewegungsumsetzer 140, der mit der beweglichen Einheit 121 verbunden ist, kann ein erster Bremsbelag 141 gegen eine Lauffläche 55 der Führungsschiene 50 bewegt werden. Der Bewegungsumsetzer 140 ist dabei um eine Achse 143 rotierbar, wobei die Achse 143 relativ zum Rahmen 101 der beweglichen Einheit 100 fixiert ist. Wird das bewegliche Element 121 bewegt, so wird diese Bewegung über den Bewegungsumsetzer 140 umgesetzt und der erste Bremsbelag 141 gegen die Lauffläche 55 der Führungsschiene 50 gedrückt. Dies ist in der ersten Position der Fall. In einer zweiten Position des beweglichen Elements 121 wird mittels des Bewegungsumsetzers 140 der erste Bremsbelag 141 von der Führungsschiene 50 bzw. der Lauffläche 55 wegbewegt. Diese Fixiervorrichtung 120 der Fig. 7 kann beispielsweise als Bremse verwendet werden, wenn innerhalb der Anschalteinheit 102 eine Steuerung 104 zur Steuerung des Elektromagneten 122 der Fixiereinheit 120 angeordnet ist. Es kann jedoch auch vorgesehen sein, die Fixiervorrichtung 120 der Fig. 7 als Notbremse zu verwenden, wenn in der Anschalteinheit 102 keine Steuerung vorgesehen ist und bei einem Stromausfall der erste Bremsbelag 141 in Richtung der Führungsschiene 50 bewegt wird und somit zu einem Abbremsen der beweglichen Einheit 100 führt.

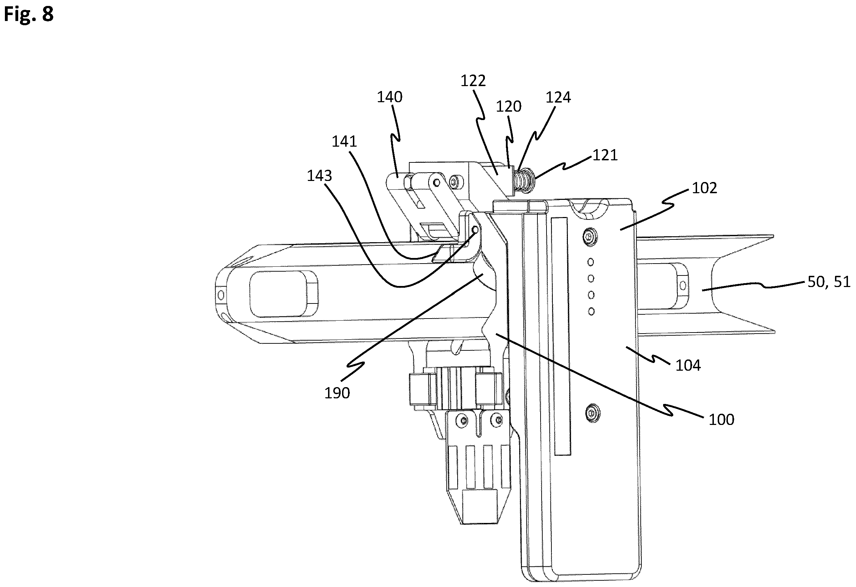

Fig. 8 zeigt eine rückwärtige Ansicht der beweglichen Einheit 100 der Fig. 7. Die Anschalteinheit 102 kann mit dem Elektromagneten 122 verbunden werden und dadurch Strom für den Elektromagneten 122 bereitstellen. Dies kann einerseits eine dauerhafte Bereitstellung eines Stroms für den Elektromagneten 122 sein, sodass das Rückstellelement 124 nur dann die bewegliche Einheit 121 bewegt, wenn der Strom ausfällt und somit eine Bewegung des ersten Bremsbelags 141 in Richtung der Führungsschiene 50 ausgelöst wird. Die Anschalteinheit 102 kann aber auch eine optionale Steuerung 104 enthalten, mit der eine Stromversorgung des Elektromagneten 122 erfolgen kann.

Die Fixiervorrichtung 120 weist zwei erste Bremsbeläge 141 auf, jeweils einen auf jeder Seite der Führungsschiene 50. Es kann auch eine andere Anzahl von ersten Bremsbelägen 141 vorgesehen sein, insbesondere nur ein erster Bremsbelag 141.

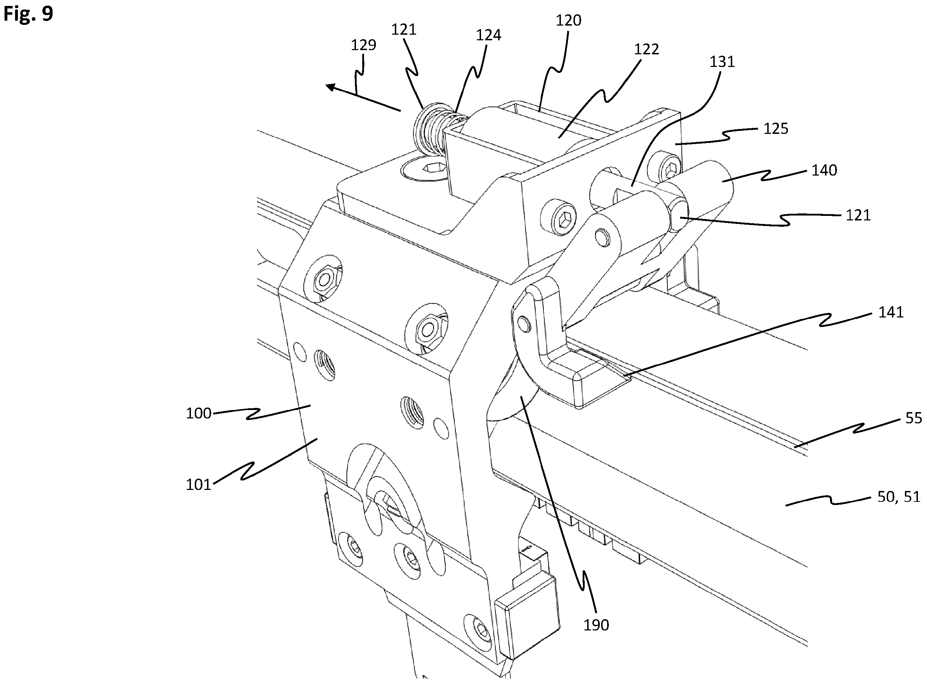

Fig. 9 zeigt eine vergrößerte Darstellung der Bremsvorrichtung 120 der Figuren 7 und 8. Das bewegliche Element 121 ist mittels des Elektromagneten 122 und der Rückstellvorrichtung 124 in einem Rahmenelement 125 angeordnet. Bewegt sich das bewegliche Element 121 in eine Richtung 129, so wird der Bewegungsumsetzer 140 derart bewegt, dass der erste Bremsbelag 141 gegen die Lauffläche 55 der Führungsschiene 50 gedrückt wird und somit eine Fixierung der beweglichen Einheit 100 erfolgt. Durch eine Bewegung des beweglichen Elements 121 in die Richtung 129 wird das bewegliche Element 121 in eine erste Position 131 gebracht, wobei dann der erste Bremsbelag 141 die Lauffläche 55 der Führungsschiene 50 berührt.

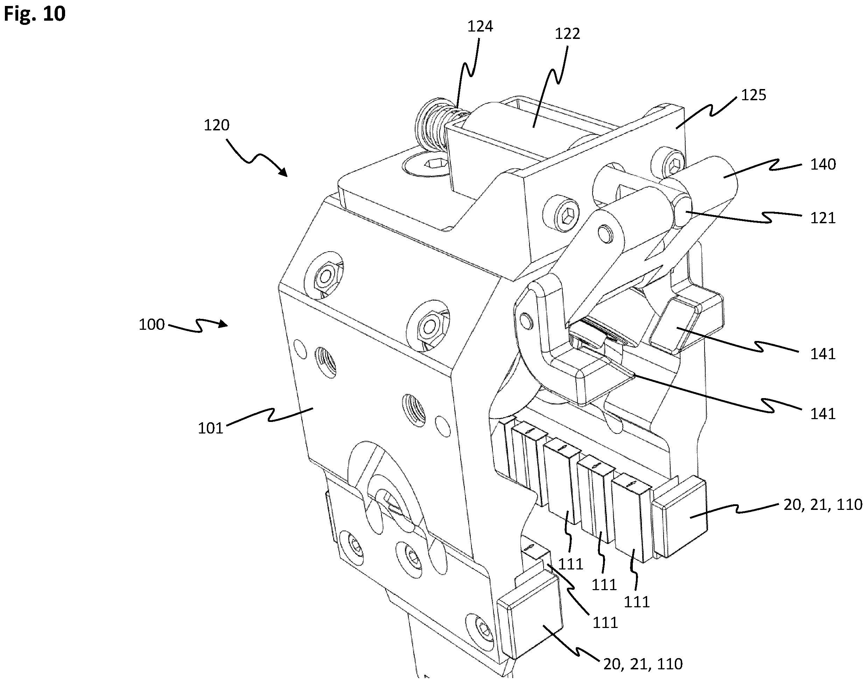

Fig. 10 zeigt eine weitere vergrößerte Ansicht der Fixiereinheit 120 der Figuren 7 bis 9. In Fig. 10 ist jedoch die Führungsschiene 50 nicht abgebildet, sodass die Magnete 111 des Läufers 110 des Linearmotors 20 sichtbar sind. Die Magnete 111 sind ebenfalls am Läufer 110 angeordnet. Ferner ist durch diese Darstellung verdeutlicht, dass die Fixiervorrichtung 120 zwei erste Bremsbeläge 141 aufweist.

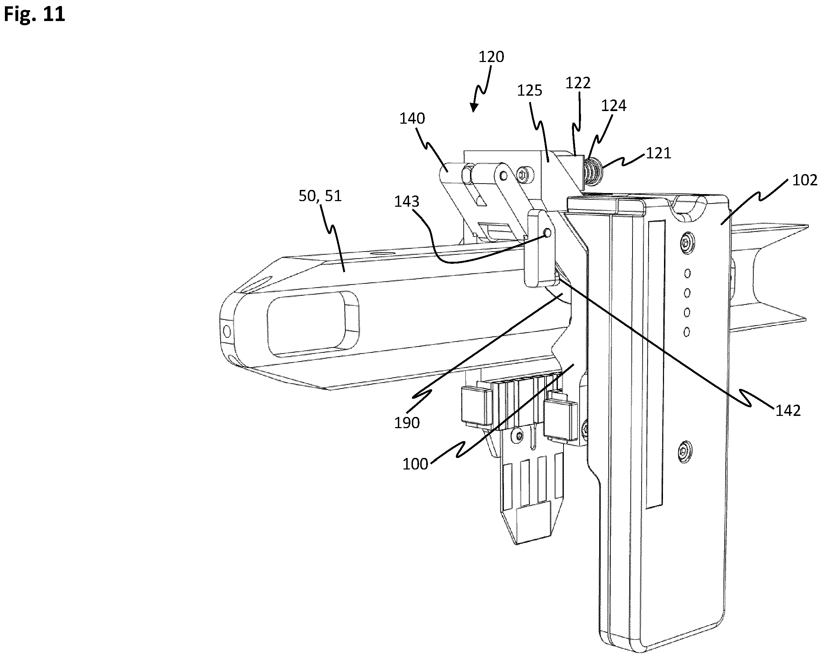

Fig. 11 zeigt ein weiteres Ausführungsbeispiel einer beweglichen Einheit 100 mit einer Fixiervorrichtung 120. In diesem Ausführungsbeispiel ist der Bewegungsumsetzer 140 derart ausgestaltet, dass durch eine Bewegung des beweglichen Elements 121 eine Bewegung eines zweiten Bremsbelags 142 in Richtung einer der Führungsrollen 190 erzeugt wird. Wird durch den Elektromagneten 122 eine Kraft in die Richtung 129 ausgeübt, so wird durch das bewegliche Element 121 der Bewegungsumsetzer 140 derart bewegt, dass der zweite Bremsbelag 142 gegen die Laufrolle 190 gedrückt wird. Dies ermöglicht ebenfalls ein Abbremsen der Bewegung der beweglichen Einheit 100 im Rahmen einer Bremse. Das bewegliche Element 121 wird dazu in die erste Position 131 gebracht. Es kann in einem Alternativen Ausführungsbeispiel auch vorgesehen sein, dass durch den Elektromagneten 122 der zweite Bremsbelag 142 von der Laufrolle 190 entfernt wird und im Falle eines Stromausfalls mittels des Rückstellelements 124 wieder gegen die Laufrolle 190 gedrückt wird.

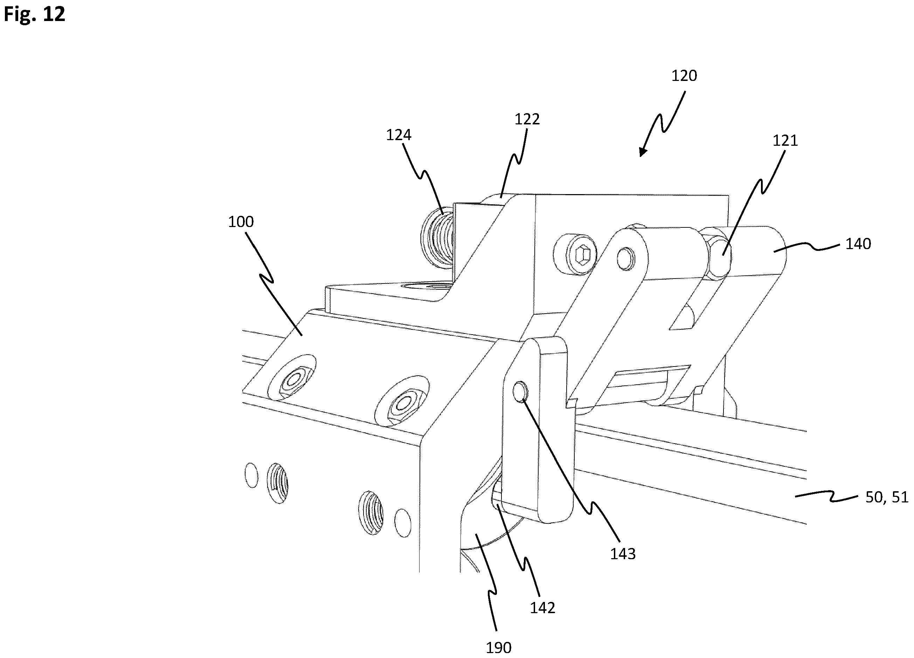

Fig. 12 zeigt eine vergrößerte Darstellung der Fixiervorrichtung 120 der Fig. 11. Durch eine Bewegung des beweglichen Elements 121 wird der Bewegungsumsetzer bewegt und drückt den zweiten Bremsbelag 142 gegen die Laufrolle 190. Dabei ist der Bewegungsumsetzer 140 um eine Achse 143 drehbar gelagert, wodurch eine Bewegung der beweglichen Einheit 121 entsprechend in eine Bewegung des zweiten Bremsbelags 142 umgesetzt werden kann.

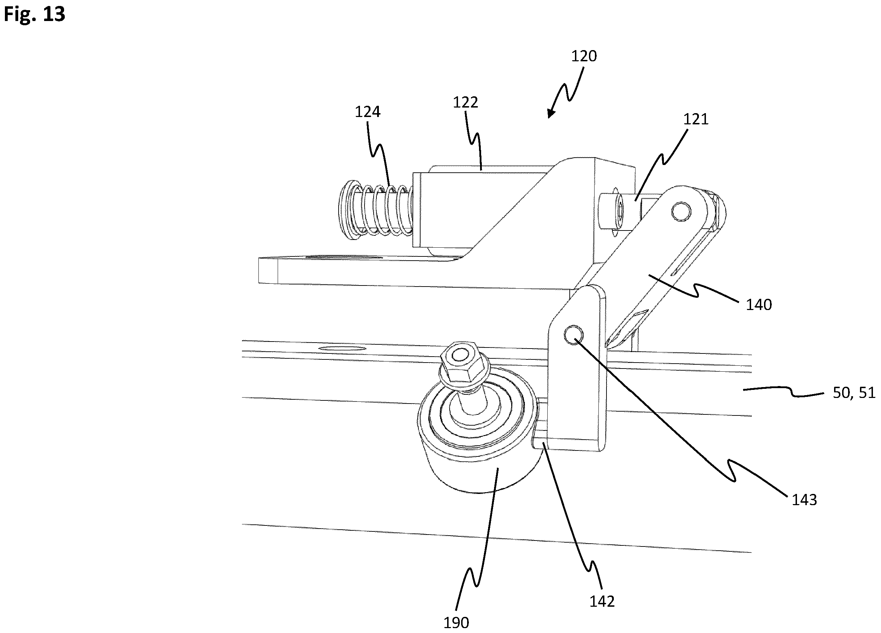

Fig. 13 zeigt eine weitere Ansicht der Fixiervorrichtung 120 der Figuren 11 und 12, bei der der Rahmen 101 der beweglichen Einheit nicht dargestellt ist und dadurch das Einwirken des zweiten Bremsbelags 142 auf die Laufrolle 190 genauer sichtbar wird. Das bewegliche Element 121 ist in diesem Fall in der ersten Position angeordnet. Wird das bewegliche Element 121 nach links bewegt, so kann der Bewegungsumsetzer 140 um die Achse 143 rotieren und dabei den zweiten Bremsbelag 142 von der Laufrolle 190 abnehmen, sodass nun eine freie Bewegung der beweglichen Einheit 100 entlang der Führungsschiene 50 möglich wird.

Die gezeigten Ausführungsbeispiele können miteinander kombiniert werden. Beispielsweise kann eine Fixiervorrichtung 120 wie in den Figuren 7 bis 10 gezeigt mit einer Fixiervorrichtung 120 wie in den Figuren 1 bis 6 gezeigt kombiniert werden. Die in den Figuren 7 bis 10 gezeigte Fixiervorrichtung 120 kann dabei als Bremse verwendet werden, während die in den Figuren 1 bis 6 gezeigte Fixiervorrichtung 120 zum Fixieren der beweglichen Einheit 100 bei Produktbearbeitungen und im Falle eines Stromausfalls genutzt werden kann. Wird nur eine Fixiervorrichtung 120 wie in den Figuren 7 bis 10 gezeigt oder nur eine Fixiervorrichtung 120 wie in den Figuren 11 bis 13 gezeigt verwendet, kann der erste Bremsbelag 141 beziehungsweise der zweite Bremsbelag 142 auch als Bremsbelag bezeichnet werden.

Mit dem gezeigten System kann eine Fixiervorrichtung 120 für ein lineares Transportsystem 1 bereitgestellt werden, mit dem einerseits über die Anschalteinheit 102 und die Steuerung 104 gesteuerte Fixierungen der beweglichen Einheit 100 möglich sind und aber andererseits auch im Falle eines Stromausfalls eine entsprechende Fixierung zur Verfügung gestellt werden kann.

### Bezugszeichenliste

- 1: lineares Transportsystem

- 10: stationäre Einheit
- 11: gerade stationäre Einheit
- 12: gebogene stationäre Einheit

- 20: Antrieb
- 21: Linearmotor
- 22: Stator

- 30: Energiesendespule
- 31: stationäre Antenne

- 50: Führungsschiene
- 51: gerade Führungsschiene
- 52: gebogene Führungsschiene
- 55: Lauffläche
- 57: Bohrung

- 100: bewegliche Einheit
- 101: Rahmen
- 102: Anschalteinheit
- 103: Energieempfangsspule
- 104: Steuerung
- 105: bewegliche Antenne
- 110: Läufer
- 111: Magnet

- 120: Fixiervorrichtung
- 121: bewegliches Element
- 122: Elektromagnet
- 124: Rückstellelement
- 125: Rahmenelement
- 129: Richtung

- 131: erste Position
- 132: zweite Position

- 140: Bewegungsumsetzer
- 141: erster Bremsbelag
- 142: zweiter Bremsbelag
- 143: Achse

- 190: Laufrolle

## Patentansprüche

1. Lineares Transportsystem (1) mit zumindest einer stationären Einheit (10), zumindest einer beweglichen Einheit (100) und einem Antrieb (20) zum Antreiben der beweglichen Einheit (100), wobei der Antrieb (20) einen Linearmotor (21) umfasst, wobei der Linearmotor (21) einen Stator (22) und einen Läufer (110) umfasst, wobei der Stator (22) an der stationäre Einheit (10) angeordnet ist, wobei die stationäre Einheit (10) weiter eine Energiesendespule (30) aufweist, wobei ein Läufer (110) an der beweglichen Einheit (100) angeordnet ist und einen oder mehrere Magnete (111) umfasst, wobei die bewegliche Einheit (100) weiter eine Anschalteinheit (102) umfasst, die eine Energieempfangsspule (103) aufweist, wobei von der Energiesendespule (30) der stationäre Einheit (10) Energie zur Energieempfangsspule (103) der Anschalteinheit (102) übertragen wird, wobei die bewegliche Einheit (100) eine Fixiervorrichtung (120) aufweist, wobei die Fixiervorrichtung (120) eingerichtet ist, die beweglichen Einheit (100) im linearen Transportsystem (1) zu fixieren, wobei die Fixiervorrichtung (120) ein bewegliches Element (121) und einen Elektromagneten (122) umfasst, wobei das bewegliche Element (121) beweglich zwischen einer ersten Position (131) und einer zweiten Position (132) ist, wobei das bewegliche Element (121) in der ersten Position (131) ein mechanisches Fixieren der beweglichen Einheit (100) auslöst, wobei das bewegliche Element (121) mittels des Elektromagneten (122) in der zweiten Position (132) gehalten wird, wobei ein Rückstellelement (124) gegen eine durch den Elektromagneten (122) erzeugte Kraft wirkt, wobei durch das Rückstellelement (124) eine Bewegung des beweglichen Elements (121) in die erste Position (131) erfolgt, wobei die Anschalteinheit (102) mit dem Elektromagneten (122) verbunden ist, um den Elektromagnet (122) mittels der Energieempfangsspule (103) mit einem Strom zu versorgen.

2. Lineares Transportsystem (1) nach Anspruch 1, wobei die bewegliche Einheit (100) durch den Antrieb (20) entlang einer Führungsschiene (50) des linearen Transportsystems (1) bewegt wird, wobei die bewegliche Einheit (100) Laufrollen (190) aufweist, wobei die Laufrollen (190) auf Laufflächen (55) der Führungsschiene (50) abrollen, wobei durch die Fixiervorrichtung (120) eine Bewegung entlang der Führungsschiene (50) erschwert wird.

3. Lineares Transportsystem (1) nach Anspruch 2, wobei das bewegliche Element (121) eingerichtet ist, in der ersten Position (131) zumindest teilweise in eine Bohrung (57) der Führungsschiene (50) einzugreifen.

4. Lineares Transportsystem (1) nach Anspruch 3, wobei das bewegliche Element (121) eingerichtet ist, die bewegliche Einheit (100) gegen durch den Antrieb (20) ausgelöste Bewegungen zu fixieren.

5. Lineares Transportsystem (1) einem der Ansprüche 2 bis 4, wobei das bewegliche Element (121) einen ersten Bremsbelag (141) aufweist, wobei der erste Bremsbelag (141) in Richtung der Führungsschiene (50) bewegt wird, wenn das bewegliche Element (121) in Richtung der ersten Position (131) bewegt wird.

6. Lineares Transportsystem (1) nach einem der Ansprüche 2 bis 5, wobei das bewegliche Element (121) einen zweiten Bremsbelag (142) aufweist, wobei der zweite Bremsbelag (142) eine der Laufrollen (190) berührt, wenn das bewegliche Element (121) in der ersten Position (131) angeordnet ist.

7. Lineares Transportsystem (1) nach Anspruch 3, wobei die Fixiervorrichtung (120) ferner ein zusätzliches bewegliches Element (121) mit einem ersten Bremsbelag (141) und/oder einem zweiten Bremsbelag (142) aufweist, wobei das zusätzliche bewegliche Element (121) beweglich zwischen einer ersten Position (131) und einer zweiten Position (132) ist, wobei der erste Bremsbelag (141) in Richtung der Führungsschiene (50) bewegt wird, wenn das zusätzliche bewegliche Element (121) in Richtung der ersten Position (131) bewegt wird und/oder der zweite Bremsbelag (142) eine der Laufrollen (190) berührt, wenn das zusätzliche bewegliche Element (121) in der ersten Position (131) angeordnet ist.

## Claims

1. A linear transport system (1) having at least one stationary unit (10), at least one movable unit (100) and a drive (20) for driving the movable unit (100), wherein the drive (20) comprises a linear motor (21), wherein the linear motor (21) comprises a stator (22) and a rotor (110), wherein the stator (22) is arranged at the stationary unit (10), wherein the stationary unit (10) further comprises an energy transmitting coil (30), wherein a rotor (110) is arranged at the movable unit (100) and comprises one or a plurality of magnets (111), wherein the movable unit (100) further comprises a switch-on unit (102) comprising an energy receiving coil (103), wherein energy is transmitted from the energy transmitting coil (30) of the stationary unit (10) to the energy receiving coil (103) of the switch-on unit (102), wherein the movable unit (100) comprises a fixing device (120), wherein the fixing device (120) is set up to fix the movable unit (100) in the linear transport system (1), wherein the fixing device (120) comprises a movable element (121) and an electromagnet (122), wherein the movable element (121) is movable between a first position (131) and a second position (132), wherein the movable element (121) triggers a mechanical fixing of the movable unit (100) in the first position (131), wherein the movable element (121) is held in the second position (132) with the aid of the electromagnet (122), wherein a reset element (124) acts against a force generated by the electromagnet (122), wherein movement of the movable element (121) to the first position (131) is effected by the reset element, wherein the switch-on unit (102) is connected to the electromagnet (122) in order to supply the electromagnet (122) with current via an energy receiving coil (103).

2. The linear transport system (1) according to claim 1, wherein the movable unit (100) is moved along a guide rail (50) of the linear transport system (1) by a drive (20), wherein the movable unit (100) comprises rollers (190), wherein the rollers (190) roll on running surfaces (55) of the guide rail (50), wherein movement along the guide rail (50) is impeded by the fixing device (120).

3. The linear transport system (1) according to claim 2, wherein the movable element (121) is set up to at least partially engage a bore hole (57) of the guide rail (50) in the first position (131).

4. The linear transport system (1) according to claim 3, wherein the movable element (121) is set up to fix the movable unit (100) to withstand movements triggered by the drive (20).

5. The linear transport system (1) according to any one of claims 2 to 4, wherein the movable element (121) comprises a first brake pad (141), wherein the first brake pad (141) is moved towards the guide rail (50) when the movable element (121) is moved towards the first position (131).

6. The linear transport system (1) according to any one of claims 2 to 5, wherein the movable element (121) comprises a second brake pad (142), wherein the second brake pad (142) contacts one of the rollers (190) when the movable element (121) is arranged in the first position (131).

7. The linear transport system (1) according to claim 7, wherein the fixing device (120) further comprises an additional movable element (121) having a first brake pad (141) and/or a second brake pad (142), wherein the additional movable element (121) may be moved between a first position 8131) and a second position (132), wherein the first brake pad (141) is moved in the direction of the guide rail (50) when the additional movable element (121) is moved in the direction of the first position (131) and/or the second brake pad (142) touches on one of the rollers when the additional movable element (121) is arranged in the first position (131).

## Revendications

1. Système de transport linéaire (1) comprenant au moins une unité fixe (10), au moins une unité mobile (100) et un entraînement (20) destiné à entraîner l'unité mobile (100), l'entraaînement (20) comprenant un moteur linéaire (21), le moteur linéaire (21) comprenant un stator (22) et un rotor (110), le stator (22) étant disposé sur l'unité fixe (10), l'unité fixe (10) comportant en outre une bobine d'émission d'énergie (30), un rotor (110) étant disposé sur l'unité mobile (100) et comprenant un ou plusieurs aimants (111), l'unité mobile (100) comprenant en outre une unité de connexion (102) qui comporte une bobine de réception d'énergie (103), l'énergie étant transmise de la bobine d'émission d'énergie (30) de l'unité fixe (10) à la bobine de réception d'énergie (103) de l'unité de connexion (102), l'unité mobile (100) comportant un dispositif de fixation (120), le dispositif de fixation (120) étant conçu pour fixer l'unité mobile (100) dans le système de transport linéaire (1), le dispositif de fixation (120) comprenant un élément mobile (121) et un électroaimant (122), l'élément mobile (121) étant mobile entre une première position (131) et une deuxième position (132), l'élément mobile (121) déclenchant une fixation mécanique de l'unité mobile (100) dans la première position (131), l'élément mobile (121) étant maintenu dans la deuxième position (132) au moyen de l'électroaimant (122), un élément de rappel (124) s'opposant à une force générée par l'électroaimant (122), un mouvement de l'élément mobile (121) jusque dans la première position (131) étant effectué par le biais de l'élément de rappel (124), l'unité de connexion (102) étant reliée à l'électroaimant (122) afin d'alimenter l'électroaimant (122) en courant au moyen de la bobine de réception d'énergie (103).

2. Système de transport linéaire (1) selon la revendication 1, l'unité mobile (100) étant déplacée par l'entraînement (20) le long d'un rail de guidage (50) du système de transport linéaire (1), l'unité mobile (100) comportant des rouleaux (190), les rouleaux (190) roulant sur des surfaces de roulement (55) du rail de guidage (50), le mouvement le long du rail de guidage (50) étant rendu plus difficile par le dispositif de fixation (120).

3. Système de transport linéaire (1) selon la revendication 2, l'élément mobile (121) étant conçu pour s'engager au moins partiellement dans un alésage (57) du rail de guidage (50) dans la première position (131) .

4. Système de transport linéaire (1) selon la revendication 3, l'élément mobile (121) étant conçu pour fixer l'unité mobile (100) afin d'empêcher les mouvements déclenchés par l'entraînement (20).

5. Système de transport linéaire (1) selon l'une des revendications 2 à 4, l'élément mobile (121) comportant une première garniture de frein (141), la première garniture de frein (141) étant déplacée en direction du rail de guidage (50) lorsque l'élément mobile (121) est déplacé en direction de la première position (131).

6. Système de transport linéaire (1) selon l'une des revendications 2 à 5, l'élément mobile (121) comportant une deuxième garniture de frein (142), la deuxième garniture de frein (142) venant en contact avec l'un des rouleaux (190) lorsque l'élément mobile (121) est disposé dans la première position (131).

7. Système de transport linéaire (1) selon la revendication 3, le dispositif de fixation (120) comportant en outre un élément mobile supplémentaire (121) pourvu d'une première garniture de frein (141) et/ou d'une deuxième garniture de frein (142), l'élément mobile supplémentaire (121) étant mobile entre une première position (131) et une deuxième position (132), la première garniture de frein (141) étant déplacée en direction du rail de guidage (50) lorsque l'élément mobile supplémentaire (121) est déplacé en direction de la première position (131) et/ou la deuxième garniture de frein (142) venant en contact avec l'un des rouleaux (190) lorsque l'élément mobile supplémentaire (121) est disposé dans la première position (131).
